## Europäisches Patentamt
## European Patent Office
## Office européen des brevets

(11) Publication number: **0 104 759**
**B1**

# EUROPEAN PATENT SPECIFICATION

(45) Date of publication of patent specification: **07.05.86**

(21) Application number: **83304848.1**

(22) Date of filing: **23.08.83**

(51) Int. Cl.⁴: **H 01 G 9/05,** H 01 G 9/00, C 25 D 7/06, C 25 D 3/66

(54) **Porous tantalum capacitor electrode and production thereof.**

(30) Priority: **27.09.82 US 423966**

(43) Date of publication of application:
**04.04.84 Bulletin 84/14**

(45) Publication of the grant of the patent:
**07.05.86 Bulletin 86/19**

(84) Designated Contracting States:
**BE DE FR GB IT NL**

(56) References cited:
**CH-A- 183 310**
**DE-B-1 034 446**
**FR-A-1 422 499**
**US-A-3 444 058**
**US-A-3 627 520**
**US-A-3 641 399**

(73) Proprietor: **SPRAGUE ELECTRIC COMPANY**
**North Adams Massachusetts 01247 (US)**

(72) Inventor: **Love, Gordon Ross**
**34 Holly Lane**
**Williamstown Massachusetts 01267 (US)**

(74) Representative: **Spencer, Graham Easdale et al**
**A.A. Thornton & CO Northumberland House**
**303-306, High Holborn**
**London WC1V 7LE (GB)**

## Description

This invention is concerned with porous tantalum capacitor electrodes and, more particularly, with a method of making an electrode having a high-surface-area tantalum sponge on only a portion of a tantalum wire.

The usual prior art method for making porous tantalum capacitor electrodes comprises compressing tantalum powder to produce a pellet that is held together by a binder, heating the pellet under vacuum to remove the binder, and vacuum sintering the pellet at least once to give it mechanical strength and to purge it of impurities, such as carbon and nitrogen. Even these drastic measures, however, cannot remove any oxygen the pellet may have acquired. A tantalum lead wire may be welded to the pellet and sintered again or the tantalum lead wire, often referred to as a riser wire, may be partially inserted into the mould cavity so that the powder is compressed about a portion of it.

More detailed descriptions of prior art methods for making porous anodes and making capacitors from them are provided in U.S. Patents 3,444,058; 3,627,520; 4,059,442; 4,127,680 and 4,025,827.

The prior art tantalum powder is usually obtained by reacting a mixed alkali metal-tantalum-halide salt, most commonly $K_2TaF_7$, known as K-salt, with metallic sodium so that a precipitate of tantalum is obtained. The mixed halide salts are washed away leaving only the tantalum powder. Most, if not all, commercial tantalum refining produces such a mixed alkali metal-tantalum-halide salt.

These prior art processes taken together constitute an effective but high cost process for making tantalum powder. Since metallic sodium is electrochemically refined and the precipitated tantalum has a high surface area, these processes are expensive because they are power intensive and time consuming.

A less power intensive way to obtain metallic tantalum has been known in the prior art for a score of years, namely direct electrodeposition of tantalum from a fused alkali metal-tantalum-halide salt. Substantial effort and attention has been directed in this process toward the avoidance of forming dendritic deposits and toward obtaining solid coherent deposits. It has been established by numerous independent workers in this field that the universally sought-after coherent deposits can be electroplated from such K-salts at relatively low current levels, that is no more than three hundred mA/cm² current density under the most favourable conditions including periodic reversal of the electroplating current. This process, however, must be followed by difficult fracturing and comminuting steps in order to obtain the necessary powder for making a porous tantalum capacitor electrode and these steps substantially absorb and cancel any cost saving that might otherwise have been provided by the use of the electroplating process.

It is also known in the prior art to electroplate metals using aqueous electrolytes at high cathode current densities, for example 8 to 36 amperes/dm² (80 to 360 mA/cm²) to plate out nodules that can be periodically or continuously removed in the form of metal powder. Such nodules are relatively easy to remove and have shapes approaching spherical particles that are desirable for powder particles. However, tantalum and niobium powders have not been produced in this manner so far as is known, probably because water-soluble salts of these metals are not readily available.

It is also known in the prior art to electroplate refractory metals, such as tantalum, using nonaqueous fused salts as the electrolyte (see, for example, U.S. Patent 3,444,058). This plating method is comparatively difficult and expensive to operate and has been applied only to producing coherent coatings of refractory metals. Such plating requires direct current (DC) densities which are typically less than 250 mA/cm², but may reach a 375 mA/cm² peak when the current is periodically reversed.

We have now found that a high-surface-area tantalum sponge can be formed directly on a tantalum wire by electroplating, the latter being effected from a solution of a tantalum fluoride in a molten alkali metal halide. In this way, the cost of producing porous tantalum capacitor electrodes can be considerably reduced as compared with the cost of the prior art methods referred to above.

According to the present invention, therefore, there is provided a method of making a porous tantalum capacitor electrode, which comprises inserting a portion of a tantalum wire, as the cathode, in an electroplating cell containing a solution of a tantalum fluoride in a molten alkali metal halide, and passing a current of at least 300 mA/cm² with respect to the surface of the wire portion which is initially exposed to the solution, to deposit a high-surface-area tantalum sponge on to the tantalum wire portion.

It is highly desirable in making a tantalum capacitor to use a very high purity tantalum metal. This is not easy to accomplish in practice, because tantalum, particularly at elevated temperatures, is an avid getter of oxygen and hydrogen. Tantalum will literally take these elements from water molecules. In the plating process according to the invention, the fused salt electrolyte is preferably shrouded by an inert gas to avoid oxygen contamination. Fortuitously the hot salt itself also acts as a vigorous oxygen getter, so that remnant oxygen in the inert gas cover is removed before the plating commences. For this reason and because the plating process is essentially faradaic whereby the plating current is conducted almost entirely by the transport of tantalum from the anode to the cathode wire, the purity of the plated tantalum is about as good as can be had, without the usual purging steps.

The single step of electroplating from a tantalum fluoride solution to produce a tantalum sponge anode is very simple as compared with the conventional prior art steps of reacting sodium with a tantalum salt to precipitate a high surface area tantalum powder, then adding contaminating binders and compressing the mixture to form a pellet which tends to mechanically damage the metal, and then purging the pellet by vacuum sintering, this latter step causing a considerable reduction in the tantalum surface area. Furthermore, it is to be expected from theoretical considerations that the purity of the electrodeposited tantalum anode of this invention will greatly exceed that realized by the above-noted conventional prior art process that itself introduces contaminants. For example, the high-surface-area precipitated tantalum powder typically contains about 1000 ppm of oxygen and a conventionally made tantalum anode has about 3000 ppm of oxygen, while the electroplated sponge anodes of this invention are likely to contain less than 1000 ppm of oxygen.

In order that the invention may be more fully understood, the following examples are given by way of illustration only; Examples 1 to 3 are in accordance with the invention, Example 4 is not in accordance with the invention and is given for the purpose of comparison. In these examples reference will be made to the accompanying drawings in which:

Figure 1 is a sectional elevation of a preferred embodiment of an electroplating cell for carrying out the method according to the invention, and

Figure 2 is a sectional elevation of a porous tantalum electrode for inclusion in an electrolytic capacitor.

Examples 1—4

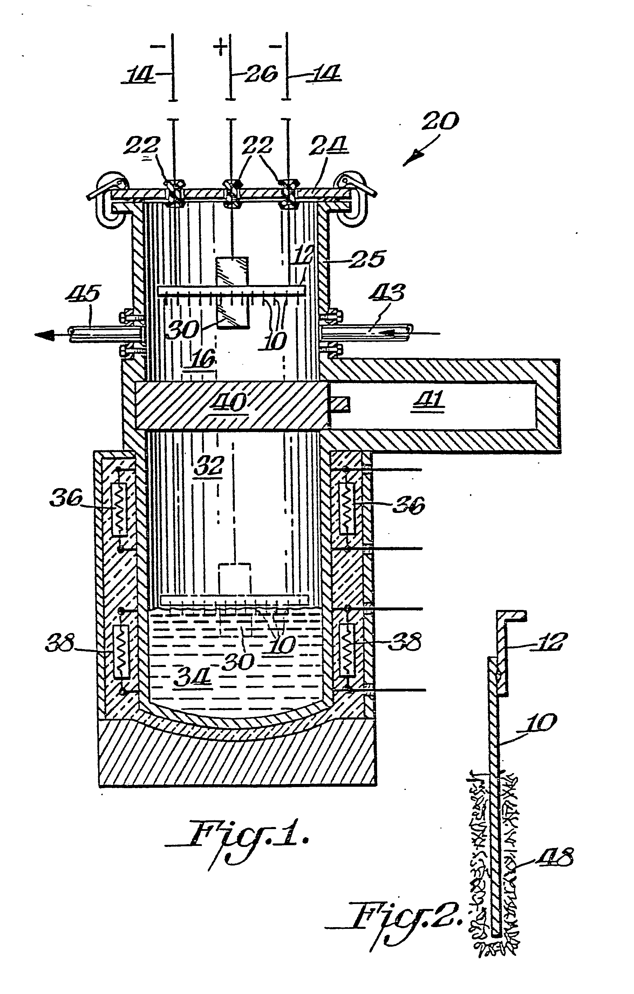

Porous tantalum electrodes were made in apparatus as shown in Figure 1. This figure shows a number of tantalum lead wires 10, each of diameter 0.014 inch (0.36 mm) welded to a stainless steel bar 12. The bar 12 was suspended horizontally by a pair of stainless steel rods 14 in an upper chamber 16 of a plating apparatus 20. The rods 14 were free to move in the swage-lock fittings 22 mounted in the top cover 24 of tank 25. By manipulation of the rods 14 outside and above the apparatus 20, lowering and raising of the bar 12 inside the closed tank 20 could be effected. Another stainless steel rod 26 also passed through a swage-lock fitting 22 to support a tantalum plate 30 that was lowered and raised along with the bar 12 as explained below. The swage-lock fittings 22 maintained a fairly effective seal throughout the plating process.

A lower chamber 32 of apparatus 20 was about half filled with an electrolyte 34. The upper portion of chamber 32 could be maintained at one elevated temperature by means of surrounding electrical resistance heaters 36, while the electrolyte 34 could be maintained at the same or another elevated temperature by the surrounding heaters 38. A gate valve 40, when closed, separated the upper chamber 16 and the lower chamber 32. The valve 40 was opened by moving it into a pocket 41.

Granules of potassium, sodium and lithium fluorides were introduced in about equal molar amounts into the lower chamber 32 along with about 30 weight percent of potassium tantalum fluoride ($K_2TaF_7$). These components mixed and melted together at a temperature of less than 800°C.

With the valve 40 open, and with the port 43 closed, a vacuum was drawn in the upper chamber 16 by evacuating air from port 45. Argon was then admitted via port 43 to both chambers 16 and 32. Valve 40 was then closed and the heaters 36 and 38 were activated to elevate and stabilize the temperatures in the upper-argon-filled portion of chamber 32 at 795°C and the electrolyte 34 at 825°C, respectively.

The valve 40 was again opened and the bar 12 and tantalum plate 30 were lowered into the molten electrolyte 34. A current of 2.0 amperes per square inch (0.3 A/cm$^2$) of surface of the tantalum lead wires was maintained for about 30 seconds.

The bar 12 was removed from the apparatus 20. Each of the lead wires 10 had a porous sponge 48 of tantalum, grown on the lower portion that was immersed, as shown in Figure 2. The sponges 48 and the corresponding tantalum wires 10 were "formed", that is anodized, to 70 volts in 0.1% $H_2SO_4$ at 80°C for two hours. The formed sponges 48 were then immersed in an electrolyte of 40% $H_2SO_4$ to just cover the sponges 48. A large tantalum foil was also submerged in the $H_2SO_4$ electrolyte. The electrical capacity of the row of sponges 48 was measured relative to the foil using a small voltage at 1 KHz. This capacity measurement and other capacitor performance measurements are given as Example 1 in the Table.

| Ex. | Cap. (μF) | TABLE DF (%) | $I_L$ (μA at 50V) |
|-----|-----------|--------------|-------------------|
| 1 | 0.028 | 1.5 | 0.2 |
| 2 | 0.175 | 1.5 | 0.2 |
| 3 | 0.042 | 2.3 | 0.05 |
| 4 | 0.010 | 0.8 | 0.002 |

In a second experiment, Example 2, another group of tantalum wires 10 was processed in the same manner as in Example 1, except that the electroplating current was raised to 2.4 amps/in$^2$ (0.37 A/cm$^2$). A third experiment, Example 3, was also the same except that the electroplating current was raised further to 2.7 amps/in$^2$ (0.42 A/cm$^2$). These data are also given in the Table along those of a control experiment, Example 4, in which the electroplating was omitted and only the base wires were formed and tested as an electrolytic capacitor.

Relatively high leakage currents ($I_L$) were observed for the capacitors of Examples 1 and 2. This was at least partially due to plating salt residues that would not dissolve in hot water or nitric acid. Units tested in Example 3 were subjected to a 30 second immersion in 25% HF at 25°C prior to formation. This treatment proved effective in removing the salt.

From the above data, it is preferred that the electroplating current at the tantalum wire should be more than 300 mA/cm$^2$ with respect to the wire area that is initially exposed to the electrolyte solution.

A further reduction in costs may be effected by using an inexpensive metal lead, such as copper or iron, that is coated with tantalum. This can be accomplished by immersing a copper wire into the molten tantalum salt solution and applying a low value current, for example 0.025 A/cm$^2$, to coat the copper with a smooth coherent layer of tantalum before increasing the current (for example to 0.5 A/cm$^2$) to obtain a porous dendritic sponge of tantalum.

### Claims

1. A method of making a porous tantalum capacitor electrode, which comprises inserting a portion of a tantalum wire, as the cathode, in an electroplating cell containing a solution of a tantalum fluoride in a molten alkali metal halide, and passing a current of at least 300 mA/cm$^2$ with respect to the surface of the wire portion which is initially exposed to the solution, to deposit a high-surface-area tantalum sponge on to the tantalum wire portion.

2. A method according to claim 1, in which the temperature of the solution is at least 700°C.

3. A method according to claim 1 or 2, in which the tantalum fluoride is $K_2TaF_7$.

4. A method according to any of claims 1 to 3, in which the alkali metal halide is a fluoride or chloride.

5. A method according to any of claims 1 to 4, in which the solution is under an atmosphere of an inert gas.

6. A method according to any of claims 1 to 5, in which the current is of one polarity only.

7. A method of making a tantalum capacitor, which comprises forming a dielectric tantalum oxide film over the surface of the tantalum sponge of a tantalum capacitor electrode made by the method according to any of claims 1 to 6, applying an electrolyte over the oxide film, and placing a counter-electrode in contact with the electrolyte.

### Patentansprüche

1. Verfahren zum Herstellen einer porösen Tantalkondensatorelektrode durch Einführen eines Abschnitts eines Tantaldrahtes als Kathode in eine Galvanozelle, die eine Lösung aus Tantalfluorid in einem geschmolzenen Alkalimetallhalogenid enthält und Durchleiten eines Stromes von wenigstens 300 mA/cm$^2$ in bezug auf die Oberfläche des Drahtabschnitts, der zu Anfang der Lösung ausgesetzt ist, um einen Tantalschwamm hoher Oberflächengröße auf dem Tantaldrahtabschnitt niederzuschlagen.

2. Verfahren nach Anspruch 1, bei dem die Temperatur der Lösung wenigstens 700°C beträgt.

3. Verfahren nach Anspruch 1 oder 2, bei dem das Tantalfluorid $K_2TaF_7$ ist.

4. Verfahren nach einem der Ansprüche 1 bis 3, bei dem das Alkalimetallhalogenid ein Fluorid oder ein Chlorid ist.

5. Verfahren nach einem der Ansprüche 1 bis 4, bei dem die Lösung unter einer Atmosphäre eines Inertgases steht.

6. Verfahren nach einem der Ansprüche 1 bis 5, bei dem der Strom von nur einer Polarität ist.

7. Verfahren zum Herstellen eines Tantalkondensators durch Ausbilden eines dielektrischen Tantaloxydfilms auf der Oberfläche des Tantalschwamms einer Tantalkondensatorelektrode, die durch das Verfahren nach einem der Ansprüche 1 bis 6 hergestellt worden ist, Aufbringen eines Elektrolyten auf den Oxydfilm und Anbringen einer Gegenelektrode in Berührung mit dem Elektrolyten.

### Revendications

1. Procédé pour fabriquer une électrode de condensateur poreuse en tantale, qui consiste à introduire une portion d'un fil de tantale comme cathode dans une cellule d'électrodéposition contenant une solution d'un fluorure de tantale dans un halogénure de métal alcalin fondu et à faire passer un courant d'au moins 300 mA/cm$^2$ de surface de la portion du fil initialement exposée à la solution, pour déposer une éponge de tantale de surface spécifique élevée sur la portion du fil de tantale.

2. Procédé selon la revendication 1, dans lequel la température de la solution est d'au moins 700°C.

3. Procédé selon la revendication 1 ou 2, dans lequel le fluorure de tantale est $K_2TaF_7$.

4. Procédé selon l'une quelconque des revendications 1 à 3, dans lequel l'halogénure de métal alcalin est un fluorure ou un chlorure.

5. Procédé selon l'une quelconque des revendications 1 à 4, dans lequel la solution est sous une atmosphère de gaz inerte.

6. Procédé selon l'une quelconque des revendications 1 à 5, dans lequel le courant est d'une polarité seulement.

7. Procédé de fabrication d'un condensateur au tantale, qui comprend la formation d'un film d'oxyde de tantale diélectrique sur la surface de l'éponge de tantale d'une électrode de condensateur en tantale fabriquée par le procédé selon l'une quelconque des revendications 1 à 6, l'application d'un électrolyte sur le film d'oxyde et la mise en place d'une contre-électrode en contact avec l'électrolyte.

Fig.1.

Fig.2.